# EUROPEAN PATENT SPECIFICATION

(11) **EP 0 873 242 B1**
(45) Date of publication and mention of the grant of the patent: **20.02.2002**
(21) Application number: 96944886.9
(22) Date of filing: 18.12.1996
(51) Int. Cl.: B32B 7/12, B29C 45/14, C09J 151/06

(54) **PROCESS FOR PREPARING A LAMINATE**
VERFAHREN ZUR HERSTELLUNG EINES LAMINATES
PROCEDE DE FABRICATION D'UN LAMINE

(30) Priority: 21.12.1995 US 576716
(43) Date of publication of application: 28.10.1998
(73) Proprietor: THE DOW CHEMICAL COMPANY, Midland, Michigan 48674 (US)
(72) Inventor: MCLENNAGHAN, Allan, W., NL-4536 GN Terneuzen (NL); VAN DE CALSEIJDE, Lodewijk, B., M., NL-4542 AZ Hoek (NL); BATISTINI, Antonio, CH-8810 Horgen (CH)
(74) Representative: Raynor, John
(86) International application number: US9620269
(87) International publication number: WO9722471

(56) References cited:
- EP-A- 0 248 311
- AU-A- 2 396 070
- FR-A- 1 355 610
- FR-A- 2 208 778
- US-A- 4 299 754
- US-A- 4 599 385
- US-A- 5 015 511

## Description

The present invention relates to a process for preparing a laminate which comprises two substrates which are bonded to each other by means of a polymeric adhesive, one of the substrates comprising an ethylene or propylene polymer.

It is well known that polyolefins are not adhesive to polar materials, such as metals, concrete and polar resins. Various methods exist to either modify the polyolefins or to apply an adhesive between the polyolefin and the polar substrate in order to improve adhesion.

U.S. Patent 4,599,385 discloses graft copolymers wherein maleic acid or maleic anhydride is grafted on a crystalline poly(propylene-butene) backbone. The graft copolymer can be employed as such as a primer layer between a polar substrate and non-polar polypropylene or it can be blended with the polypropylene and the blend applied directly. If the graft copolymer is employed as a primer layer, it is usually applied to the polar substrate as a powder coating and adhered to the polar substrate by heating and fusion into a continuous film. Alternatively, the graft copolymer can be dissolved in a hot solvent and applied by brushing or spraying. Application of the polypropylene layer to the primed substrate can be accomplished by extrusion coating or lamination with a preformed film.

U.S. Patent 4,599,385 teaches that powder coating followed by fusion is preferred. However, special equipment is required for powder coating and the types of materials are limited to those to which the powder coating can be applied. Alternatively, when the graft copolymer is blended with polypropylene and the blend is applied directly, higher amounts of the graft copolymer is required to achieve sufficient adhesion. Coextrusion techniques are recommended for preparing laminates of polypropylene and polar polymer films using the graft copolymer as an adhesive. In these techniques, layers of the molten polypropylene, graft copolymer and polar polymer are simultaneously extruded to form a layered sheet. Naturally, this technique is limited to thermoplastic polymers which can be coextruded.

U.S. Patent 4,198,327 discloses a composition having improved adhesion to polar solid materials. The composition comprises (A) from 99 to 70 parts by weight of a modified crystalline polyolefin having grafted thereto a monomer selected from unsaturated carboxylic acids and their anhydrides, esters, amides, imides and metal salts and (B) 1 to 30 parts by weight of a hydrocarbon elastomer. The polyolefin composition can be bonded to a polar material by heating them such that, at least the polyolefin composition melts and then joining them together under pressure. When the polar material is not thermoplastic, the molten composition can be coated or laminated onto the polar material. However, the U.S. patent does not suggest how to achieve adhesion between a polar material and a non-modified polyolefin.

U.S. Patent 5,302,418 discloses a process for coating a polypropylene or polyethylene surface with a maleic acid-grafted polypropylene or polyethylene which contains from 0.5 to 10 weight percent, preferably at least 4 weight percent, of maleic acid. In this process, the surface is coated with a dope comprising the graft copolymer and a solvent at a coating temperature which is sufficient to keep the graft copolymer dissolved in the solvent, that is, at 85°C to 100°C. The dope contains from 2 to 15 weight percent, preferably from 3 to 10 weight percent solids. The solvent is an aromatic solvent, such as toluene. The dope must be hot enough to keep the copolymer dissolved in the dope solvent until the copolymer bonds to the surface. The process is mainly useful for coating polypropylene fibers.

European Patent Application EP-0 407 666 A1 discloses a method for the surface treatment of a cured molded rubber article made of a polyolefin. For producing the molded article, rubber (EPDM) formed by copolymerizing ethylene, an α-olefin and a diolefin is used and mixed with a softener, a filler and a curing agent. The mixture is molded into the desired shape by an extrusion molding machine. EPDM cured rubber is used in molded articles for automobiles. The articles are usually painted. In order to improve the adhesion of the paint to the molded articles, the articles are treated with a solution of a modified polymer having an intrinsic viscosity of at least 0.3 in an organic solvent. The polymer is modified by graft-copolymerization of a propylene-ethylene copolymer with maleic acid or an anhydride thereof. The propylene content is 10 to 90 mole percent, especially 20 to 80 mole percent. The concentration of the modified polymer is 10 to 100 kg/m³ solvent, preferably 20 to 60 kg/m³ solvent. After this surface treatment, the cured molded rubber article is further coated with a paint or another resin coating material by electrostatic coating, spray coating or brush coating. U.S. Patent 4,299,754 suggests a solution of a similar modified graft polymer as a surface treating agent for fabricated articles of polyolefins, such as automobile bumpers. The propylene content in the modified graft polymer is from 50 to 75 mole percent.

U.S. Patent 4,058,647 discloses that a polyester, a polyamide or a hydrolyzed copolymer of ethylene-vinyl acetate may be laminated with a polymeric composition comprising both a modified and an unmodified polyolefin and a rubber component. The modified polyolefin is modified with an unsaturated acid or anhydride. The laminate is prepared by melt-pressing sheets made of the above-mentioned materials or by a laminating blow molding process. U.S. Patent 4,588,648 discloses that polypropylene and nylon layers may be laminated with an adhesive layer comprising a blend of an ungrafted polypropylene and a graft copolymer of maleic anhydride onto an olefin polymer. The laminate is produced by coextrusion.

However, the disclosed methods are not suitable for preparing laminates which contain a natural or synthetic material which cannot or should not be melted, such as leather, cotton, jute or synthetic leather.

One object of the present invention is to provide a new process for preparing a laminate which comprises two substrates which are bonded to each other by means of a polymeric adhesive and one of the substrates comprises an ethylene or propylene polymer.

For example, in the footwear industry, there is a strong need for methods which are useful in the production of laminates which contain a first substrate that cannot or should not be melted during the production of the laminate, such as rubber, leather, fabricated natural fibers, or a synthetic resin like synthetic leather or a polyamide and which contain an ethylene or propylene polymer as a second substrate.

Accordingly, another object of the present invention is a new process for preparing an above-mentioned laminate which does not make use of a coextrusion process.

One aspect of the present invention is a process for preparing a laminate comprising a first substrate (I) and a second substrate (II) which comprises an ethylene or propylene polymer and which is adhesively bonded to the first substrate by means of a polymeric adhesive,
wherein the process comprises the steps of:
A) applying to the first substrate (I) a primer comprising an organic solvent and an ethylene or propylene polymer having grafted thereto an unsaturated carboxylic acid or an anhydride, ester, amide, imide or metal salt thereof and
B) injection molding an ethylene or propylene polymer and optional additives on to the primed substrate (I).

Another aspect of the present invention is a laminate which has been produced according to the above-mentioned process.
A preferred aspect of the present invention is footwear which has been produced according to the above-mentioned process.

The produced laminates exhibit an excellent adhesion between the second substrate, which comprises an ethylene or propylene polymer, and the first that substrate, which may be polar. The process of the present invention is very efficient. A particular advantage of the process of the present invention is that the adhesive is not applied as a powder, as a melt or as a hot solution to the substrates. Such methods have been suggested in the prior art but are inconvenient.

In step A) of the process of the present invention a primer is applied to the first substrate (I). The ethylene or propylene polymer in the primer acts as a polymeric adhesive and has grafted thereto an unsaturated carboxylic acid or an anhydride, ester, amide, imide or metal salt thereof, hereafter designated as "grafting compound". The grafting compound preferably is an aliphatic unsaturated dicarboxylic add or an anhydride, an ester, amide, imide or metal salt derived from such acid. The carboxylic acid preferably contains up to 6, more preferably up to 5 carbon atoms. Alkali metal salts are the preferred metal salts. Examples of unsaturated carboxylic acids are maleic acid, fumaric acid, itaconic add, acrylic acid, methacrylic acid, crotonic acid, and citraconic acid. Examples of derivatives of unsaturated carboxylic acids are maleic anhydride, citraconic anhydride, itaconic anhydride, methyl acrylate, methyl methacrylate, ethyl acrylate, ethyl methacrylate, butyl acrylate, butyl methacrylate, glycidyl acrylate, glycidyl methacrylate, monoethyl maleate, diethyl maleate, monomethyl fumarate, dimethyl fumarate, monomethyl itaconate, diethyl itaconate, acrylamide, methacrylamide, monomaleamide, dimaleamide, N,N-diethylmaleamide, N-monobutylmaleamide, N,N-dibutylmaleamide, monofumaramide, difumaramide, N-monoethylfumaramide, N,N-diethylfumaramide, N-monobutylfumaramide, N,N-dibutylfumaramide, maleimide, N-butylmaleimide, N-phenylmaleimide, sodium acrylate, sodium methacrylate, potassium acrylate, and potassium methacrylate. Maleic anhydride is the preferred grafting compound. One or more, preferably one, grafting compound is grafted onto the ethylene or propylene polymer.

The content of the grafted compound in the ethylene or propylene polymer is preferably in the range from 0.05, more preferably from 0.5, and most preferably from 0.8, to preferably 15, more preferably to 10, and most preferably to 2 weight percent, based on the total weight of the grafted ethylene or propylene polymer.

The grafted ethylene or propylene polymer, as well as the ethylene or propylene polymer which is used for grafting, preferably have a density of up to 0.902 g/cm³, more preferably from 0.850 to 0.902 g/cm³, most preferably from 0.860 to 0.890 g/cm³, particularly from 0.865 to 0.880 g/cm³. However, it is to be understood that the polymer density changes slightly upon grafting. In the case of ethylene polymers, it has been found that the polymer density is important for providing a primer with sufficient mechanical strength and flexibility and for achieving a sufficient solubility of the grafted ethylene polymer in the organic solvent.

By the term "an ethylene or propylene polymer" is meant an ethylene polymer, a propylene polymer, a mixture of different ethylene polymers, a mixture of different propylene polymers or a mixture of at least one ethylene polymer and at least one propylene polymer. Preferred ethylene polymers and propylene polymers are described below.

The ethylene or propylene polymer preferably has a crystallinity of from 5 to 35 percent, more preferably of from 10 to 20 percent.

The ethylene or propylene polymer can be an ethylene or propylene homopolymer or an interpolymer of propylene and at least one C₄-C₂₀-α-olefin and/or a C₄-C₁₈-diolefin. Preferably, the ethylene polymer is an interpolymer of ethylene and at least one C₃-C₂₀-α-olefin and/or a C₄-C₁₈-diolefin. Most preferably, the ethylene polymer is an interpolymer of ethylene and a C₃-C₂₀-α-olefin having a density of up to 0.902 g/cm³. The term "interpolymer" as used herein refers to polymers prepared by the polymerization of at least two different monomers. The generic term interpolymer thus embraces copolymers, usually employed to refer to polymers prepared from two different monomers, and polymers prepared from more than two different monomers. The interpolymer can be a random or block interpolymer.

Preferred α-olefins contain 4 to 10 carbon atoms, of which 1-butene, 1-hexene, 4-methyl-1-pentene and 1-octene are the most preferred. Preferred diolefins are isoprene, butadiene, 1,4-pentadiene, 1,4-hexadiene, 1,5-hexadiene, 1,7-octadiene, 1,9-decadiene, dicyclopentadiene, methylene-norbornene, and 5-ethylidene-2-norbornene. The interpolymers may contain other comonomers, such as a C₂-C₂₀ acetylenically unsaturated monomer.

The primer most preferably contains a random or block copolymer of ethylene and a C₄-C₁₀-α-olefin, most preferably a copolymer of ethylene and 1-butene, 1-hexene, 4-methyl-1-pentene, or 1-octene. The ethylene content is preferably more than 50 percent, more preferably from 60 to 90 percent, most preferably from 70 to 80 percent, based on the total weight of the polymer.

Known ethylene polymers can be used for grafting, which preferably have a density within the above-mentioned range. One useful type of ethylene polymers is a linear copolymer of ethylene and an α-olefin having at least four carbon atoms which has a narrow molecular weight distribution, a random distribution of comonomer units along the polymer backbone, and a homogeneity index of at least 75. Such polymers are described by Elston in U.S. Patent 3,645,992. Other useful ethylene polymers and a process for producing them are described in U.S. Patent 5,324,800. They have a weight average molecular weight of from 500 to 1,400,000, preferably from 1000 to 500,000 and a molecular weight distribution M_{w}/Mₙ from 1.5 to 4.0. They are linear copolymers of ethylene and a C₃-C₂₀-α-olefin. Other useful ethylene polymers are described in U.S. Patent 4,429,079. They are random copolymers of ethylene and an α-olefin having 3 to 10 carbon atoms which have a melt index of 0.1 to 50 g/10 minute, preferably 1 to 30 g/10 minute, a density of 0.870 to 0.900 g/cm³, preferably 0.875 to 0.895 g/cm³, a crystallinity by X-rays of 5 to 40 percent, preferably 7 to 30 percent, a melting point of 40°C to 100°C, preferably 60°C to 90°C, and an ethylene content of 85 to 95 mole percent. The ethylene polymers include those polymers available under the trademark TAFMER (Trademark of Mitsui Petrochemical) and EXACT (Trademark of Exxon Chemical), particularly those which have a density of up to 0.902 g/cm³.

The most preferred interpolymers of ethylene and at least one C₃-C₂₀-α-olefin and/or a C₄-C₁₈-diolefin onto which an above-mentioned grafting compound is grafted are substantially linear ethylene polymers which have:
i) from 0.01 to 3 long chain branches per 1000 carbon atoms along the polymer backbone;
ii) a melt flow ratio, I₁₀/I₂≥5.63;
iii) a molecular weight distribution, M_{w}/Mₙ, defined by the equation: (M_{w}/Mₙ)≤(I₁₀/I₂)-4.63, and
iv) a critical shear stress at the onset of gross melt fracture of greater than 4 x 10⁶ dyne/cm² or a critical shear rate at the onset of surface melt fracture of at least 50 percent greater than the critical shear rate at the onset of surface melt fracture of a linear ethylene polymer having about the same melt index and M_{w}/Mₙ.

The substantially linear ethylene polymers and methods of preparing them are described in more detail in U.S. Patents 5,272,236 and 5,278,272.

The substantially linear ethylene polymers have from 0.01, preferably from 0.05, to 3, and preferably to 1, long chain branches per 1000 carbon atoms along the polymer backbone. Long chain branching is defined herein as a chain length of at least about 6 carbon atoms, above which the length cannot be distinguished by carbon NMR spectroscopy. The long chain branch can be about as long as the polymer backbone. For ethylene/α-olefin copolymers, the long chain branch is at least one carbon longer than the short chain branch that results from the incorporation of the α-olefin(s) into the polymer backbone. The empirical effect of the presence of long chain branching in the substantially linear ethylene/α-olefin copolymers is manifested as enhanced rheological properties.

There are known techniques useful for determining the presence of long chain branches in ethylene polymers, including ethylene/1-octene copolymers. Two such methods are gel permeation chromatography coupled with a low angle laser light scattering detector (GPC-LALLS) and gel permeation chromatography coupled with a differential viscometer detector (GPC-DV). The use of these techniques for long chain branch detection and the underlying theories have been well documented in the literature. See, Zimm, G.H. and Stockmayer, W.H., J. Chem. Phys., 17, 1301 (1949) and Rudin, A., Modern Methods of Polymer Characterization, John Wiley & Sons, New York (1991) pp. 103-112.

In contrast to the term "substantially linear", the term "linear" means that the polymer lacks measurable or demonstrable long chain branches, that is, the polymer is substituted with an average of less than 0.01 long branches/1000 carbons.

By "melt index" or "I₂" is meant the melt index as measured in accordance with ASTM D-1238, Condition 190°C/2.16 kg. "I₁₀" is measured in accordance with ASTM D-1238, Condition 190°C/10 kg. The melt index I₂ of the substantially linear ethylene polymer is generally from 0.01 g/10 minute to 1000 g/10 minute, preferably from 0.01 g/10 minute to 100 g/10 minute. The melt flow index ratio, that is, the I₁₀/I₂, is at least 5.63, preferably at least 6, more preferably at least 7, and is essentially independent of the polydispersity index, in contrast to conventional polyethylenes which show a dependence of the melt flow index on the polydispersity index. This property is illustrated in Figure 2 of U.S. Patent 5,272,236.

The polydispersity index of the substantially linear ethylene polymers (that is, the molecular weight distribution, or the ratio of the weight average molecular weight to the number average molecular weight (M_{w}/Mₙ)), as determined by gel permeation chromatography is defined by the equation: (M_{w}/Mₙ)≤(I₁₀/I₂)-4.63. The polydispersity index preferably is less than 3.5, more preferably from 1.5 to 2.5.

Furthermore, substantially linear ethylene polymers, specifically substantially linear ethylene polymers, have a critical shear stress at the onset of gross melt fracture, as determined by gas extrusion rheometry, of greater than 4 x 10⁶ dynes/cm³, or a gas extrusion rheology such that the critical shear rate at the onset of surface melt fracture for the substantially linear ethylene polymer is at least 50 percent greater than the critical shear rate at the onset of surface melt fracture for a linear ethylene polymer, wherein the substantially linear ethylene polymer and the linear ethylene polymer comprise the same comonomer or comonomers, the linear ethylene polymer has an I₂, M_{w}/Mₙ and density within 10 percent of the corresponding values for substantially linear ethylene polymer and wherein the respective critical shear rates of the substantially linear ethylene polymer and the linear ethylene polymer are measured at the same melt temperature using a gas extrusion rheometer.

Determination of the critical shear rate and the critical shear stress in regards to melt fracture as well as other rheology properties is performed using a gas extrusion rheometer (GER). The gas extrusion rheometer is described by M. Shida, R.N. Shroff and L.V. Cancio in Polymer Engineering Science, Vol. 17, No. 11, p. 770 (1977), and in "Rheometers for Molten Plastics" by John Dealy, published by Van Nostrand Reinhold Co. (1982) on pp. 97-99.

The substantially linear ethylene polymer has a single differential scanning calorimetry, DSC, melting peak between -30°C and 150°C. The single melting peak may show, depending on equipment sensitivity, a "shoulder" or a "hump" on the low melting side that constitutes less than 12 percent, typically less than 9 percent, and more typically less than 6 percent, of the total heat of fusion of the polymer.

Methods of grafting an above-mentioned grafting compound onto an above-described non-grafted ethylene or propylene polymer are generally known in the art and described, for example, in U.S Patents 4,739,017 and 4,762,890.

The primer used in the process of the present invention comprises (A) one or more of the above-described grafted ethylene or propylene polymers and (B) an organic solvent, wherein the total amount of the grafted ethylene polymer and/or propylene polymer(s) is at least 1 percent, based on the total weight of (A) and (B). Preferably, the primer comprises from 2 percent, more preferably from 3 percent, and preferably up to 30 percent, more preferably up to 20 percent, and most preferably up to 10 percent of the grafted ethylene polymer and/or propylene polymer (A), based on the total weight of (A) and (B).

Examples of organic solvents which are useful in the primer are aromatic hydrocarbons, such as benzene, toluene, or xylene; aliphatic hydrocarbons, such as hexane, heptane, octane, or decane; cyclic hydrocarbons, such as cyclohexane or methyl cyclohexane; medium hydrogen bonding solvents, such as methyl ethyl ketone, tetrahydrofuran or tertiary butanol; or chlorinated hydrocarbons, such as trichloroethylene, perchloroethylene, dichloroethylene, dichloroethane or chlorobenzene. Aromatic hydrocarbons, particularly alkyl-substituted aromatic hydrocarbons, are preferred. The primer may contain a mixture of organic solvents.

The combined weight of the grafted ethylene and/or propylene polymer(s) (A) and the organic solvent(s) (B) is at least 80 percent, more preferably at least 90 percent, even more preferably at least 95 percent, based on the total weight of the primer. Most preferably, the primer substantially consists of the ethylene and/or propylene polymer(s) (A) and the organic solvent(s) (B).

The primer used in the process of the present invention may contain one or more other components, such as an additional adhesive, a tackifying resin. a stabilizer, for example, a known UV stabilizer or heat stabilizer, and/or one or more non-grafted ethylene and/or propylene polymers, such as those described above.

A tackifying resin is typically an aliphatic resin, a polyterpene resin, a hydrogenated resin, or a mixed aliphatic aromatic resin. Examples of tackifying resins include those available under the trademark ESCOREZ (Exxon Chemical Co.), PICCOTAC, PICCOVAR, PICCOLYTE (Hercules, Inc.), WINGTACK (Goodyear) and ZONAREZ (Arizona).

If the primer used in the process of the present invention contains an additional adhesive, its amount preferably is up to 15 percent. more preferably from 0.5 to 10 percent, most preferably from 1 to 5 percent, based on the total weight of the primer. The adhesive may be, for example, a 1- or 2-part adhesive. Examples of suitable adhesives include epoxy resins, urethanes, latexes, acrylates, elastomer-solvent cements, gums, and polysilicones. A preferred additional adhesive is an isocyanate compound or prepolymer, preferably a di- or triisocyanate compound or prepolymer, such as tris(4-isocyanatophenyl) thiophosphate, toluene diisocyanate, methylene di-p-phenylene isocyanate, or urethane polymers thereof. Examples of commercially available polyisocyanate compounds or prepolymers include VKFE (manufactured by Fratelli Zucchini s.r.l.). DESMODUR™ RF-E (Trademark of Miles Inc.), PAPI'" polymeric MDI (Trademark of The Dow Chemical Company) and UPACO 3570 (Manufactured by Worthen Industries, UPACO Division).

The inclusion of a tackifying resin or an additional adhesive in the primer is, for example, advantageous if the first substrate (I) comprises a synthetic resin, such as PVC (synthetic leather), or synthetic fibers, such as a polyamide or polyester. If the second substrate (I) comprises natural leather or natural fibers, such as cotton or jute fibers, the above-described grafted ethylene or propylene polymer preferably is the only adhesive comprised in the primer.

The primer is prepared by mixing the grafted ethylene or propylene polymer or a mixture thereof and optional additives with the organic solvent(s), preferably at a temperature of from 10°C to 150°C, more preferably from 20°C to 100°C, in order to dissolve grafted ethylene or propylene polymer. It may be useful to agitate the mixture, for example, by stirring the mixture for 30 to 90 minutes. At least the above-described preferred grafted interpolymers of ethylene and at least one C₃-C₂₀-α-olefin and/or a C₄-C₁₈-diolefin which have a density of up to 0.902 g/cm³ are sufficiently soluble in an organic solvent that they remain dissolved, even when the temperature of the primer is reduced to room temperature or to a slightly elevated temperature. This is very advantageous because no special precautions are necessary to keep the primer hot and to apply it hot to the substrate.

In step A of the process of the present invention the primer can be applied to the first substrate (I) in any convenient way, for example, by brushing, dipping or spraying techniques. The primer preferably has a temperature of less than 80°C, more preferably from 10°C to 80°C, most preferably from 15°C to 60°C when it is applied to the first substrate (I). When the concentration of the grafted ethylene or propylene polymer in the primer is high and, accordingly, the viscosity of the primer is high, it may be useful to apply the primer at a higher temperature to the substrate (I).

The first substrate (I) can comprise or substantially consist of a wide variety of materials, particularly polar materials, for example, a metal, such as aluminum, iron, brass, or galvanized iron; an inorganic material, such as glass, cement, or asbestos, or a natural material such as wood. However, preferred materials are synthetic or natural rubbers, synthetic leathers, such as PVC, natural leathers like nubuk leather, canvas, buckskin or grain leather, materials made of natural fibers, such as cotton or another cellulosic material, linen or jute, or materials made of synthetic resins or synthetic fibers, such as polyamides, preferably nylon 6, nylon 10, nylon 11, nylon 12, nylon 66, or nylon 610, polyesters, such as polyethylene terephthalates or polybutylene terephthalates, polycarbonates, polyurethanes, saponification products of an ethylene/vinyl acetate copolymer, epoxy resins, vinyl chloride resins, vinylidene chloride resins, poly(methyl methacrylate), or mixtures thereof. The first substrate (I) can consist of one or more layers and each layer can consist of one or more materials. The amount of primer which is applied to the first substrate generally is from 1 to 100 g/m² surface of the first substrate, preferably from 10 to 90 g/m², more preferably from 30 to 80 g/m². Usually, one of the surfaces is at least partially coated with the primer. After the coating, a portion or the entire amount of the solvent which is comprised in the primer may be evaporated, although drying of the primed substrate (I) generally is not necessary.

Before the above-described primer is applied to the first substrate (I), an additional above-described adhesive or tackifying resin may be applied to the first substrate neat or dissolved in a solvent. However, preferably only the above-described primer is applied to the first substrate (I) before the second substrate (II) is injection molded onto the first substrate. This means that the above-described primer preferably is the only adhesive which is applied to the first substrate (I) for bonding the two substrates together.

In step B of the process of the present invention, an ethylene or propylene polymer and optional additives are injection molded onto the primed first substrate (I). Thereby, the second substrate (II) is formed on the primed first substrate (I). By the term "an ethylene or propylene polymer" is meant an ethylene polymer, a propylene polymer, a mixture of different ethylene polymers, a mixture of different propylene polymers or a mixture of at least one ethylene polymer and at least one propylene polymer. Exemplary thereof are polypropylenes, branched low density polyethylene of a density of from 0.915 to 0.940 g/cm³, high density polyethylene of a density of from 0.940 to 0.960 g/cm³, linear low density polyethylene (LLDPE) or very low density polyethylene (VLDPE) of a density of from 0.900 to 0.915 g/cm³ or blends thereof. These polymers are known in the art. The density of the non-grafted ethylene or propylene polymer preferably is up to 0.902 g/cm³, but it can also be higher. The density of the ethylene or propylene in the second substrate (II) generally is from 0.850 to 0.960 g/cm³, more preferably from 0.850 to 0.902 g/cm³, most preferably from 0.860 to 0.890 g/cm³. Preferred ethylene and propylene polymers are those which have been described above as a starting material for preparing the grafted ethylene and propylene polymers in the primer. The more preferred ethylene polymers are those disclosed in U.S. Patents 3,645,992; 5,324,800; 4,429,079; and 5,272,236 supra. The most preferred ethylene polymers are the substantially linear ethylene polymers which are described in more detail above.

The ethylene or propylene polymer may be blended with one or more optional additives, such as heat stabilizers, weather stabilizers, antistatic agents, nucleating agents, fillers, pigments, dyes, fire retardants, blowing agents, antiblocking agents, and/or oils, such as paraffinic oil or naphthenic oil. In addition to one or more ethylene or propylene polymers, the second substrate may contain one or more other polymers, such as styrene block copolymers, PVC, chlorinated polyethylene, EVA, chloroprene, ethylene-propylene rubbers, EPDM rubbers, natural rubbers, thermoplastic polyurethanes, or silane grafted polyolefins. However, the amount of the ethylene or propylene polymer(s) preferably is at least 40 percent, more preferably at least 50 percent, even more preferably at least 70 percent, based on the total weight of the second substrate. Most preferably, the second substrate substantially consists of one or more ethylene or propylene polymers.

In the process of the present invention, step B is preferably carried out as follows:

A primed substrate (I) is placed in a mold of an injection molding machine such that the primed surface faces the injection point(s). The ethylene or propylene polymer and optional additives are heated to a temperature sufficient for plasticizing the polymer(s), preferably to a temperature of from 80°C to 350°C, more preferably from 100°C to 250°C, most preferably from 120°C to 180°C. The mold temperature generally is from 0°C to 80°C, more preferably from 5°C to 40°C. The ethylene or propylene polymer and optional additives are allowed to solidify, whereby the second substrate (II) is formed on the primed substrate (I). This step generally takes from 5 to 300 seconds, preferably from 15 to 120 seconds. Suitable injection molding machines are known in the art. The second substrate (II) preferably has a thickness of from 1 mm to 30 cm, more preferably from 4 mm to 5 cm. The second substrate (II) can be compact or foamed, depending on the types of additives mixed with the ethylene or propylene polymer prior to injection molding.

The produced laminate can then be used as such or subjected to further operations, such as cutting it to pieces of the desired size, painting, abrading or varnishing.

The laminate produced according to the process of the present invention is useful for a variety of end-use applications, including bathroom scales, carpet-backing, textile backing for automotive interior trims, and, most preferably, for footwear, like shoes. In such footwear, the second substrate (II), which comprises an ethylene or propylene polymer, forms the shoe sole, whereas the first substrate (I) forms the upper part of the shoe.

The following examples are for illustrative purposes only and are not intended to limit the scope of the invention. Unless stated otherwise, all parts and percentages are given by weight.

### Example 1

For preparing the primer, a substantially linear ethylene polymer having a density of 0.870 g/cm³ and a melt index of 5.0 g/10 minute was used which is commercially available from DuPont Dow Elastomers L.L.C. as ENGAGE™ EG 8200 ethylene-1-octene copolymer. 0.95 Weight percent of maleic anhydride had been grafted onto the substantially linear ethylene polymer. For preparing the primer, 90 parts of toluene and 10 parts of the grafted substantially linear ethylene polymer were heated for 1 hour under reflux. The primer was allowed to cool to room temperature and then applied to leather strips of 17.5 cm x 2.5 cm x 0.12 cm which had previously been treated according to DIN 53273. The treatment according to DIN 53273 involved scalping medium fat (8 to 10 weight percent) leather to remove the grain layer, abrading it with P40 abrasive paper and removing any debris by a soft brush. 50 g of primer per square meter of leather strips was applied using a brush. The primed leather was left to dry for 30 minutes at 23°C. Primed and dried leather strips were then placed in a 170 mm x 170 mm x 4 mm mold of an ENGEL™ 80 injection molding machine. A composition consisting of 30 parts of Engage™ EG8150 (available from DuPont Dow Elastomers L.L.C) polyolefin elastomer, 14 parts of Affinity'" PF1140 (available from The Dow Chemical Company) polyolefin plastomer, both being ethylene-octene copolymers, 23 parts of calcium carbonate filler, 30 parts of oil Shellflex™ 371 available from Shell and 3 parts of IP90 high density polyethylene available from The Dow Chemical Company, was injection molded onto the leather strips. The temperatures in the four cylinders were 160°C, 160°C, 160°C and 150°C respectively. The mold temperature was 35°C. The injection pressure was 80 bar (8.000 kPa) the screw stroke 68 mm, the cooling time 40 seconds and the injection speed 80-80-80-80-80-80-80-40-30 mm/s. The adhesion between the leather and the substrate made of the ethylene/1-octene copolymer was measured according to DIN 53273 L(3D). The peel force was 6.0 N/mm.

### Comparative Example A

Example 1 was repeated, except that no primer was applied to the leather strips before the ethylene/1-octene copolymer was injection molded onto the leather strips. The peel force between the leather and the substrate made of the ethylene/1-octene copolymer was only 0.9 N/mm.

### Comparative Example B

The primer of Example 1 was applied to a leather strip and dried as in Example 1. A sheet of 8 cm x 2.5 cm x 0.2 cm was prepared from the same composition that was used in Example 1 for injection molding. 50 g of the primer of Example 1 per square meter of polymer sheet was applied. The primed polymer sheet was left to dry for 30 minutes at 23°C. The primed polymer sheet was then heated to 80°C and pressed onto the primed leather strip at a pressure of 4 bar. The peel force between the leather and the substrate made of the ethylene/1-octene copolymer was only 1.8 N/mm.

### Comparative Example C

5 parts of a substantially linear ethylene polymer having a density of 0.902 g/cm³ and a melt index of 1.0 g/10 minute which is commercially available from The Dow Chemical Company as AFFINITY PL 1880™ and 95 parts of toluene were heated as described in Example 1. The substantially linear ethylene polymer was not grafted with maleic anhydride. A cloudy dispersion resulted. On standing at 19°C, the polymer precipitated from the dispersion.

### Comparative Example D

5 Parts of propylene copolymer having a density of 0.902 g/cm³ which is commercially available from Union Carbide as CEFOR DS4D25L and 95 parts of toluene were heated as described in Example 1. The propylene polymer was not grafted with maleic anhydride. No homogeneous solution was observed but a gel structure. The dispersion and gel prepared according to Comparative Examples C and D were not very suitable as a primer in the process of the present invention.

### Examples 2 to 7

A 7.5 percent solution of the same maleic anhydride grafted substantially linear ethylene polymer as in Example 1 was prepared by heating under reflux for one hour the maleic anhydride grafted polymer in a solvent mixture to give a final composition of 20 percent tert-butanol, 9.5 percent toluene and 63 percent cyclohexane. In Examples 2, 4 and 6, the produced solution was used as such as a primer. In Examples 3, 5 and 7, 5 percent of a VKFE, isocyanate compound, commercially available from Fratelli Zucchini s.r.l., was added after having cooled the solution to room temperature.

As described in Example 1, the primer was then applied, using a brush, onto test strips of woven synthetic fabric based on Nylon, PET and synthetic leather P-PVC. Prior to applying the primer, the strips were roughened with P40 abrasive paper, cleaned with 1,1,2,2,-tetrachloroethane and methyl ethyl ketone, respectively. The coated strips were then used in an injection molding process and tested as described in Example 1.

| Example | Primer // Substrate | Peel Force L(3d), N/mm |
|---|---|---|
| 2 | 7.5% solution // Nylon | 0 |
| 3 | 7.5% solution + VKFE//Nylon | 5 |
| 4 | 7.5% solution // PET | 0 |
| 5 | 7.5% solution + VKFE // PET | 4.5 |
| 6 | 7.5% solution // P-PVC | 0 |
| 7 | 7.5% solution + VKFE // P-PVC | 2.5 |

### Examples 8 and 9

A 5 percent solution of the same maleic anhydride grafted polymer as in Example 1 was prepared by heating under reflux for one hour the maleic anhydride grafted polymer in a solvent mixture to give a final composition of 18 percent methyl ethyl ketone, 10 percent toluene and 67 percent cyclohexane. In Example 8, the produced solution was used as such as a primer. In Example 9, 5 percent of VKFE isocyanate compound, commercially available from Fratelli Zucchini s.r.l., was added after having cooled the solution to room temperature.

As described in Example 1, the primer was then applied, using a brush, onto the test strips of high fat (15 to 16 percent) leather. The coated strips were then used in an injection molding process and peel tested and creep tested as described in Example 1.

| Example | Primer | Peel Force L(3d), N/mm | Creep (mm), 10 min with 1.5 kg at 50°C |
|---|---|---|---|
| 8 | 5% solution | 3 | 5.5 |
| 9 | 5% solution + VKFE | 5.8 | 0 |

The aging properties of the adhesive bond are important for high fat leathers where the adhesive properties may be reduced due to the attack of the adhesive bond by the fat. The results of the creep test according to DIN 53273 after aging were as follows:

| Example | Creep (mm) 10 min, 1.5 Kg at 50°C after 3 days at Room Temperature | Creep (mm) 10 min, 1.5 Kg at 50°C after 13 days at Room Temperature | Creep (mm) 10 min, 1.5 Kg at 50°C after 3 days at Room 7 days at 50°C and 3 days at Room Temperature |
|---|---|---|---|
| 8 | 5.5 | 8.5 | 2.3 |
| 9 | 0 | 0.75 | 0 |

### Examples 10 and 11

A 2.5 percent solution of the same maleic anhydride grafted polymer as in Example 1 was prepared by heating under reflux for one hour the maleic anhydride grafted polymer in toluene. In Example 10, the solution was used as such as a primer. In Example 11, 5 percent of VKFE isocyanate compound, commercially available from Fratelli Zucchini s.r.l., was added after having cooled the solution to room temperature.

As described in Example 1, this primer was then applied, using a brush, onto test strips of medium fat leather. The coated strips were used in an injection molding process and tested as described in Example 1.

| Example | Primer | Creep (mm), 10 min with 1.5 kg at 50°C | Creep (mm), 10 min with 1.5 kg at 60°C | Creep (mm), 10 min with 1.5 kg at 70°C |
|---|---|---|---|---|
| 10 | 2.5% solution | 7 | 8 | 35 |
| 11 | 2.5% solution + VKFE | 1 | 1 | 9 |

## Claims

1. A process for preparing a laminate comprising a first substrate (I) and a second substrate (II) which comprises an ethylene or propylene polymer and which is bonded to the first substrate by means of a polymeric adhesive,
wherein the process comprises the steps of:
A) applying to the first substrate (I) a primer comprising an organic solvent and an ethylene or propylene polymer having grafted thereto an unsaturated carboxylic acid or an anhydride, ester, amide, imide or metal salt thereof, the combined weights of the grafted ethylene and/or propylene polymer and the organic solvent is at least 80%, based on the total weight of the primer, and
B) injection molding an ethylene or propylene polymer and optional additives onto the primed substrate (I).

2. The process of Claim 1 wherein the primer comprises an interpolymer of ethylene and at least one C₃-C₂₀-α-olefin and/or a C₄-C₁₈-diolefin having a density of up to 0.902 g/cm³.

3. The process of Claim 1 or 2 wherein the primer is applied to the first substrate (I) at a temperature of less than 80°C.

4. The process of any one of Claims 1 to 3 wherein the amount of the grafted unsaturated carboxylic acid, anhydride, ester, amide, imide or metal salt thereof is from 0.05 to 15 percent, based on the total weight of the grafted ethylene or propylene polymer.

5. The process of any one of Claims 1 to 4 wherein the second substrate (II) comprises an ethylene or propylene homopolymer, an interpolymer of propylene and at least one C₄-C₂₀-α-olefin and/or a C₄-C₁₈-diolefin, or an interpolymer of ethylene and at least one C₃-C₂₀-α-olefin and/or a C₄-C₁₈-diolefin, or a combination thereof.

6. The process of Claims 1 to 5 wherein the second substrate (II) comprises an ethylene polymer of a density of up to 0.902 g/cm³.

7. The process of Claim 2 or Claim 5 wherein the interpolymer of ethylene and at least one C₃-C₂₀-α-olefin and/or a C₄-C₁₈-diolefin is a substantially linear ethylene polymer having:
i) from 0.01 to 3 long chain branches per 1000 carbon atoms along the polymer backbone;
ii) a melt flow ratio, I₁₀/I₂≥5.63;
iii) a molecular weight distribution, M_{w}/Mₙ, defined by the equation: (M_{w}/Mₙ)≤(I₁₀/I₂)-4.63, and
iv) a critical shear stress at the onset of gross melt fracture of greater than 4 × 10⁶ dyne/cm² or
a critical shear rate at the onset of surface melt fracture of at least 50 percent greater than the critical shear rate at the onset of surface melt fracture of a linear ethylene polymer having about the same melt index and M_{w}/Mₙ.

8. The process of any one of Claims 1 to 7 wherein the primer additionally contains an isocyanate compound or prepolymer.

9. The process of any one of Claims 1 to 8 wherein the first substrate (I) comprises a synthetic and/or natural resin, rubber, leather and/or fibers.

10. A laminate produced according to the process of any one of Claims 1 to 9.

11. Footwear produced according to the process of any one of Claims 1 to 9.

## Patentansprüche

1. Verfahren zur Herstellung eines Laminats, umfassend ein erstes Substrat (I) und ein zweites Substrat (II), welches ein Ethylen- oder Propylenpolymer umfaßt, und das mittels eines Polymerklebstoffs an das erste Substrat geklebt wird, wobei das Verfahren die Schritte umfaßt:
A) Aufbringen einer Haftgrundierung, umfassend ein organisches Lösungsmittel und ein Ethylen- oder Propylenpolymer, das eine ungesättigte Carbonsäure oder ein Anhydrid, einen Ester, ein Amid, Imid oder Metallsalz davon aufgepfropft hat, auf das erste Substrat (I), wobei das kombinierte Gewicht des Ethylen- und/oder Propylenpfropfpolymers und des organischen Lösungsmittels mindestens 80%, bezogen auf das Gesamtgewicht der Grundierung, beträgt, und
B) Spritzgießen eines Ethylen- oder Propylenpolymers und fakultativer Additive auf das grundierte Substrat (I).

2. Verfahren nach Anspruch 1, wobei die Haftgrundierung ein Interpolymer von Ethylen und mindestens einem C₃-C₂₀ α-Olefin und/oder einem C₄-C₁₈ Diolefin mit einer Dichte von bis zu 0,902 g/cm³ umfaßt.

3. Verfahren nach Anspruch 1 oder 2, wobei die Haftgrundierung bei einer Temperatur kleiner 80°C auf das erste Substrat (I) aufgebracht wird.

4. Verfahren nach einem der Ansprüche 1 bis 3, wobei die Menge der aufgepfropften ungesättigten Carbonsäure, des aufgepfropften Anhydrids, Esters, Amids, Imids oder Metallsalzes davon, von 0,05 bis 15 Prozent, bezogen auf das Gesamtgewicht des Ethylen- oder Propylenpfropfpolymers, beträgt.

5. Verfahren nach einem der Ansprüche 1 bis 4, wobei das zweite Substrat (II) ein Ethylen- oder Propylenhomopolymer, ein Interpolymer von Propylen und mindestens einem C₄-C₂₀ α-Olefin und/oder einem C₄-C₁₈ Diolefin, oder ein Interpolymer von Ethylen und mindestens einem C₃-C₂₀ α-Olefin und/oder einem C₄-C₁₈ Diolefin, oder eine Kombination davon umfaßt.

6. Verfahren nach einem der Ansprüche 1 bis 5, wobei das zweite Substrat (II) ein Ethylenpolymer einer Dichte von bis zu 0,902 g/cm³ umfaßt.

7. Verfahren nach Anspruch 2 oder Anspruch 5, wobei das Interpolymer von Ethylen und mindestens einem C₃-C₂₀ α-Olefin und/oder einem C₄-C₁₈ Diolefin ein im wesentlichen lineares Ethylenpolymer ist, mit:
i) 0,01 bis 3 Langkettenverzweigungen pro 1000 Kohlenstoffatome entlang des Polymergrundgerüsts;
ii) einem Schmelzfließverhältnis I₁₀/I₂ ≥ 5,63;
iii) einer Molekulargewichtsverteilung M_{w}/Mₙ, welche definiert ist durch die Gleichung: (M_{w}/Mₙ) ≤ (I₁₀/I₂) - 4,63; und
iv) einer kritischen Scherspannung bei Einsetzen von Gesamtschmelzbruch von mehr als 4 x 10⁶ dyne/cm² oder einer kritischen Scherrate bei Einsetzen von Oberflächenschmelzbruch von mindestens 50 Prozent mehr als die kritische Scherrate bei Einsetzen von Oberflächenschmelzbruch eines linearen Ethylenpolymers mit etwa dem gleichen Schmelzindex und M_{w}/Mₙ.

8. Verfahren nach einem der Ansprüche 1 bis 7, wobei die Haftgrundierung zusätzlich eine Isocyanatverbindung oder ein Isocyanatpräpolymer enthält.

9. Verfahren nach einem der Ansprüche 1 bis 8, wobei das erste Substrat (I) ein Kunst- und/oder Naturharz, Kautschuk, Leder und/oder Fasern umfaßt.

10. Laminat, hergestellt durch das Verfahren nach einem der Ansprüche 1 bis 9.

11. Schuhwerk, hergestellt durch das Verfahren nach einem der Ansprüche 1 bis 9.

## Revendications

1. Procédé de préparation d'un stratifié comprenant un premier support (I) et un second support (II) qui renferme un polymère d'éthylène ou de propylène et qui est lié au premier support au moyen d'un polymère adhésif, procédé qui comprend les étapes suivantes :
A) l'application sur le premier support (I) d'une couche primaire comprenant un solvant organique et un polymère d'éthylène ou de propylène, sur lequel est greffé un acide carboxylique insaturé ou un anhydride, ester, amide, imide ou sel métallique d'un tel acide, les poids combinés du polymère d'éthylène et/ou de propylène greffé et du solvant organique représentant au moins 80 % du poids total de 1a couche primaire, et
B) le moulage par injection d'un polymère d'éthylène ou de propylène et d'additifs éventuels sur le support (I) revêtu de 1a couche primaire.

2. Procédé selon la revendication 1, dans lequel la couche primaire comprend un copolymère d'éthylène et d'au moins une α-oléfine en C₃ à C₂₀ et/ou une dioléfine en C₄ à C₁₈, ayant une masse volumique atteignant au plus 0,902 g/cm³.

3. Procédé selon la revendication 1 ou 2, dans lequel on applique la couche primaire sur le premier support (I) à une température inférieure à 80 °C.

4. Procédé selon l'une quelconque des revendications 1 à 3, dans lequel 1a quantité d'acide carboxylique insaturé ou d'anhydride, ester, amide, imide ou sel métallique d'un tel acide, greffé représente 0,05 à 15 % du poids total du polymère d'éthylène ou de propylène greffé.

5. Procédé selon l'une quelconque des revendications 1 à 4, dans lequel le second support (II) renferme un homopolymère d'éthylène ou de propylène, un copolymère de propylène et d'au moins une α-oléfine en C₄ à C₂₀ et/ou une dioléfine en C₄ à C₁₈, un copolymère d'éthylène et d'au moins une α-oléfine en C₃ à C₂₀ et/ou une dioléfine en C₄ à C₁₈, ou une combinaison de ces produits.

6. Procédé selon l'une quelconque des revendications 1 à 5, dans lequel le second support (II) renferme un polymère d'éthylène ayant une masse volumique atteignant au plus 0,902 g/cm³.

7. Procédé selon la revendication 2 ou 5, dans lequel le copolymère d'éthylène et d'au moins une α-oléfine en C₃ à C₂₀ et/ou une dioléfine en C₄ à C₁₈ est d'un polymère d'ethylène pratiquement linéaire, ayant :
i) 0,01 à 3 ramifications à longue chaîne pour 1 000 atomes de carbone sur le squelette du polymère,
ii) un rapport des indices de fluidité à l'état fondu I₁₀/I₂≥5,63,
iii) un indice de polymolécularité Mp/Mn défini par l'équation (Mₚ/Mₙ)≤(I₁₀/I₂)-4,63, et
iv) une contrainte de cisaillement critique au début de la fracture de la masse fondue globale supérieure à 4 x 10⁶ dynes par cm² ou une vitesse de cisaillement critique au début de 1a fracture de la masse fondue en surface, qui est supérieure d'au moins 50 % à la vitesse de cisaillement critique au début de la fracture de la masse fondue en surface pour un polymère linéaire d'éthylène ayant à peu près le même indice de fluidité à l'état fondu et le même rapport Mₚ/Mₙ.

8. Procédé selon l'une quelconque des revendications 1 à 7, dans lequel la couche primaire contient en outre un composé ou prépolymère isocyanate.

9. Procédé selon l'une quelconque des revendications 1 à 8, dans lequel le premier support (I) renferme une résine synthétique et/ou une résine naturelle, un caoutchouc, du cuir et/ou des fibres.

10. Stratifié produit par le procédé selon l'une quelconque des revendications 1 à 9.

11. Chaussure produite par le procédé selon l'une quelconque des revendications 1 à 9.
